# EUROPEAN PATENT APPLICATION

(11) **EP 4 797 212 A2**
(43) Date of publication of application: **26.08.2026**
(21) Application number: 26159532.6
(22) Date of filing: 19.02.2026
(51) Int. Cl.: G06T 13/40, G06T 17/00

(54) **METHODS AND SYSTEMS FOR GENERATING 3D MESH OF A HUMAN USING A PARAMETERIZED MODEL**

(30) Priority: 20.02.2025 US 202563760798 P; 02.07.2025 US 202563837347 P; 12.02.2026 EP 26305189; 12.02.2026 EP 26305188
(71) Applicant: Naver Corporation, Seongnam-si, Gyeonggi-do 13561 (KR)
(72) Inventor: BREGIER, ROMAIN, 38240 MEYLAN (FR); BARADEL, Fabien, 38240 MEYLAN (FR)
(74) Representative: Regimbeau

(57) **Abstract**

The present disclosure relates to a computer-implemented method for generating a three-dimensional (3D) target mesh (330), the method including: applying shape parameters to a base mesh (312) to define a resting mesh that is adjusted based on a target shape description (304); generating a target rig using forward kinematics from a resting rig and 3D target pose parameters; and generating a target mesh using blend skinning by deforming the resting mesh based on a pose of the target rig relative to the resting rig; wherein applying the shape parameters, generating the target rig and generating the target mesh defines a differentiable parametric model (205).

## Description

### FIELD

The field of this disclosure is that of methods for generating digital representations of human shapes, and systems therefor. More particularly, the disclosure relates to a method for generating a three-dimensional (3D) target mesh based on an interpretable description of a human, and systems therefor.

### BACKGROUND

Parametric body models are widely used in computer vision and graphics to represent 3D human meshes using a compact set of shape and pose parameters. They have enabled Human Mesh Recovery (HMR) methods from RGB (red, green, blue) images and videos, where a 3D mesh corresponding to each person observed in the input is predicted. Such 3D human understanding may be used in downstream applications such as robotics and navigation, automatic captioning, postural studies, sign language translation, and personal avatar for use in virtual or augmented reality. Modeling people using 3D human meshes is motivated by the fact that the way humans behave and interact with their environment is better captured when modeling the full 3D surface of the body. Differentiable body models, in particular, may be used together with vision backbones, providing a prediction head to perform efficient HMR from RBG images and videos.

Surface mesh models have been used in computer graphics to model the appearance of objects. In addition, skeleton-based deformations and shape blending have been a standard way to model variability in pose and shape, which methods are particularly well suited for human characters. Human models representative of body surface deformations across different poses and across different individuals characteristics, through data-driven approaches based on 3D human scans are known such as SMPL (see Loper et al., "SMPL: a skinned multi-person linear model" in ACM Transactions on Graphics Volume 34, Issue 6, Article No. 248, pp. 1-16; also see US Patent Nos. 10395411, 11017577, and 11127163). SMPL relies on Principal Component Analysis (PCA) to represent body shapes and are effective at modeling adult bodies that align with the morphology found in the datasets on which these models are originally designed and fitted.

To overcome existing surface mesh models being limited to a particular dataset on which they are trained, separate models has been proposed for different body types, for instance distinct models for infants, adult males and adult females. In the context of HMR, this solution requires a model to first classify the body type category of the detected person. AGORA (see Patel et al, "AGORA: Avatars in geography optimized for regression analysis," in arXiv as arXiv:2104.14643) unifies children and adults by introducing an extra parameter to linearly interpolate between child and adult models. However, acquiring morphological data representative of the global population remains challenging, as 3D body scans are costly, time-consuming, and raise privacy concerns due to the sensitivity of biometric data.

In addition to the forgoing limitations, constructing digital representations of human shapes using parametric body models generally requires a high level of knowledge or skill in order to create accurate representations. Many utilities that exist for doing so operate using parameters that are not intuitive and require a user to have a high level of knowledge or skill in the field. It would therefore be advantageous to overcome some of the forgoing limitations while accounting for different body types, age and gender by providing a more intuitive method for generating digital representations of humans for use in any number of downstream applications.

### SUMMARY

For these purposes, the present disclosure relates generally to computer vision, computer graphics, simulation, and machine learning systems that generate, estimate, and use three-dimensional ("3D") representations of humans. More particularly, the disclosure relates to systems and methods for generating a posed 3D human mesh using a differentiable parametric model that produces a 3D target mesh from interpretable shape parameters and pose parameters, and to related techniques for (i) training neural networks that estimate parameters of a parametric 3D human body model from visual data, (ii) generating synthetic datasets, (iii) constructing calibrated phenotype sampling models, (iv) constructing interoperability mappings between different mesh topologies and rigging systems, (v) detecting and handling physically implausible self-collisions, and (vi) generating physically plausible pose parameters using learned latent pose priors and associated annotation tooling.

In one aspect, the disclosure provides a computer-implemented method for generating a three-dimensional (3D) target mesh, the method including: applying shape parameters to a base mesh to define a resting mesh that is adjusted based on a target shape description; generating a target rig using forward kinematics from a resting rig and 3D target pose parameters; and generating a target mesh using blend skinning by deforming the resting mesh based on a pose of the target rig relative to the resting rig; wherein applying the shape parameters, generating the target rig and generating the target mesh defines a differentiable parametric model. In some embodiments, the target shape description includes a set of phenotypes. The set of phenotypes may include one or more of gender, age, race, muscle, weight, height, and proportions. In some embodiments, the 3D target pose parameters are determined from a generalized description of a target pose and corresponding sorted 3D key points associated with the generalized description of the target pose.

In some embodiments, applying the shape parameters includes computing the resting mesh from the base mesh using (i) 3D vertices associated with the base mesh and (ii) 3D vertex displacements. In some embodiments, computing the resting mesh includes interpolating between blend shapes associated with the set of phenotypes to compute displacements of the resting mesh vertices from the base mesh vertices. In some embodiments, generating the target mesh using blend skinning includes applying a blend skinning function to a set of skinning weights and vertices. The blend skinning function may be a linear operation in certain embodiments, and may be a quaternion operation (e.g., dual-quaternion operation) in certain embodiments. In some embodiments, the target rig is generated by sequentially applying a plurality of pose parameters.

In some embodiments, the base mesh is selected based on a determined quality level. The quality level may be determined based on one or more of available processing resources and a downstream application. Additionally or alternatively, the quality level may be determined based on a specified resolution of the target mesh. In some embodiments, the interpretable shape description represents humans across one or more of demographic groups, age, size, and gender.

In another aspect, a neural network model may be trained and used for performing a task using the differentiable parametric model. The task may include one or more of 3D pose estimation, motion generation, and understanding from visual data. In some embodiments, the trained neural network model is used in a downstream application, including one or more of robot navigation, vehicle navigation, augmented reality, virtual reality, and human-robot interaction. In some embodiments, the neural network model is incorporated into an autonomous device. For example, the autonomous device may capture at least one image with a capturing device of the autonomous device, input the image as an inference query to the neural network model to obtain an inference answer, and use the inference answer for controlling an actuator of the autonomous device. In some embodiments, the inference answer produced by the neural network model comprises estimated body-model parameters including at least pose parameters and shape parameters for a person depicted in the image. In some embodiments, the estimated body-model parameters are provided to the differentiable parametric model to generate a posed three-dimensional human mesh representing the person, and the posed three-dimensional human mesh is then used to perform a downstream operation that produces a technical effect, including at least one of: (i) updating a collision-avoidance map or navigation plan and generating a control signal for an actuator of an autonomous robot or vehicle, (ii) rendering an animated avatar for display by an augmented reality or virtual reality device, and (iii) selecting or generating a control response in a human-robot interaction system. In some embodiments, the autonomous device is a robot. In some embodiments, the method further includes receiving an inference query that is output from a user interface, inputting the inference query to the neural network model to obtain an inference answer, and outputting the inference answer for display at a user interface.

In some embodiments, the disclosure further provides computing a collision model that includes a set of convex rigid bodies rigidly attached to bones of a rig. In some embodiments, the disclosure further provides computing a synthetic dataset using the disclosed method for generating a three-dimensional (3D) target mesh. In some embodiments, the disclosure further provides training a Human Mesh Recovery (HMR) model for reconstructing 3D human meshes from 2D images using the synthetic dataset and the disclosed method for generating a three-dimensional (3D) target mesh.

In another aspect, the disclosure provides a system including one or more processors and a non-transitory computer readable storage medium storing instructions that, when executed, cause the system to apply shape parameters to a base mesh to define a resting mesh that is adjusted based on a target shape description, generate a target rig using forward kinematics from a resting rig and 3D target pose parameters, and generate a target mesh using blend skinning by deforming the resting mesh based on a pose of the target rig relative to the resting rig, wherein applying shape parameters, generating the target rig, and generating the target mesh defines a differentiable parametric model. In another aspect, the disclosure provides a computer-program product tangibly embodied in a non-transitory machine-readable storage medium including instructions configured to cause one or more processors to perform the foregoing operations.

In another aspect, the disclosure provides a computer-implemented method for generating an interoperability mapping between (i) a first human body model configured to output a first 3D human mesh having a first vertex connectivity and (ii) a second human body model having a second vertex connectivity different from the first vertex connectivity. The method may include obtaining a set of training target meshes expressed in the second vertex connectivity; initializing a sparse regression matrix R that maps vertex coordinates of a source mesh to vertex coordinates of a target mesh by projecting target-mesh vertices onto a surface of the source mesh and computing barycentric interpolation weights relative to one or more source-mesh faces; refining entries of the sparse regression matrix R by minimizing an objective function that measures a geometric distance between the target mesh and a mapped mesh obtained by applying R to the source mesh; during the refining, enforcing a left/right symmetry constraint on the sparse regression matrix R; and storing the refined sparse regression matrix R in a non-transitory memory for converting meshes between the first vertex connectivity and the second vertex connectivity. In some embodiments, initializing includes, for each target-mesh vertex, identifying a nearest source-mesh triangle and storing indices of vertices of the selected source-mesh triangle and barycentric weights of the nearest point with respect to the selected source-mesh triangle. In some embodiments, the sparse regression matrix R is constrained such that each target-mesh vertex is represented as a linear combination of at most four source-mesh vertices. In some embodiments, refining includes jointly optimizing (i) entries of the sparse regression matrix R and (ii) parameters of the first human body model used to generate the source mesh, including pose parameters and shape parameters, to reduce the geometric distance across a plurality of poses. In some embodiments, the objective function includes at least one of a Chamfer distance, a point-to-surface distance, and a vertex-to-vertex distance between the mapped mesh and the target mesh. In some embodiments, enforcing the left/right symmetry constraint includes constraining regression coefficients of R for a left-side target-mesh vertex and a corresponding right-side target-mesh vertex to satisfy a mirroring relationship defined by a precomputed symmetry correspondence between vertices. In some embodiments, an inverse sparse regression matrix R⁻¹ configured to map from the second vertex connectivity to the first vertex connectivity is computed and stored with R as a bidirectional interoperability mapping. In some embodiments, a skeletal-rig conversion is generated in association with the interoperability mapping, the skeletal-rig conversion mapping between (i) a first skeletal rig associated with the first human body model and (ii) a second skeletal rig associated with the second human body model, and including at least one of a joint correspondence mapping and a pose-parameter retargeting operation.

In another aspect, the disclosure provides a computer-implemented method for generating a calibrated sampling model for interpretable phenotype parameters of a parametric 3D human body model. The method may include defining a phenotype parameter vector comprising a plurality of interpretable phenotype parameters that control body morphology of the parametric 3D human body model; obtaining one or more reference anthropometric data sources that provide statistical information about human morphology as a function of at least age and gender; defining, for at least a subset of the interpretable phenotype parameters, respective parameterized probability distributions conditioned on at least age and gender; calibrating parameters of the probability distributions by repeatedly sampling phenotype parameter vectors from the probability distributions, generating corresponding 3D meshes using the parametric 3D human body model, computing one or more anthropometric measurements from the generated 3D meshes, and adjusting the probability distributions to reduce a mismatch between statistics of the anthropometric measurements and the statistical information from the one or more reference anthropometric data sources; and storing the calibrated probability distributions for use as at least one of (i) a sampling mechanism to generate synthetic training data and (ii) a regularization prior in an optimization that fits the parametric 3D human body model to image data. In some embodiments, the phenotype parameter vector includes an age parameter and calibrating includes determining a mapping between the age parameter and a morphological age expressed in years. In some embodiments, the respective parameterized probability distributions include Beta distributions conditioned on at least morphological age and gender. In some embodiments, the reference anthropometric data sources include at least one growth standard dataset that reports statistics for at least one of height-for-age, weight-for-age, and body mass index-for-age. In some embodiments, computing anthropometric measurements includes computing at least one of a stature measurement from a vertex-to-vertex distance, a circumference measurement as a total length of a path on the mesh defined by a set of connected vertices, and a body mass index proxy computed from a function of stature and mesh volume. In some embodiments, storing the calibrated probability distributions includes storing a conditional sampling model that samples age and gender and then samples remaining phenotype parameters conditioned on the sampled age and gender. In some embodiments, rejection sampling is performed for phenotype parameter vectors that violate one or more plausibility constraints including at least one of a joint range-of-motion constraint, a body proportion constraint, and a body mass index range constraint. In some embodiments, using the calibrated probability distributions as the regularization prior includes performing maximum-a-posteriori optimization of phenotype parameters for fitting the parametric 3D human body model to a monocular RGB image.

In another aspect, the disclosure provides a computer-implemented method of training a neural network to estimate parameters of a parametric 3D human body model from an RGB image. The method may include obtaining a training input comprising at least one RGB image of a person and a set of 2D target keypoints in the RGB image; predicting, using the neural network, body-model parameters for the person; generating, using the parametric 3D human body model and the body-model parameters, a corresponding set of predicted 3D keypoints; computing a loss including an angular error between (i) normalized 3D direction vectors from a camera center to the predicted 3D keypoints and (ii) target 3D rays obtained by inverse projection of the 2D target keypoints through camera intrinsics; and updating weights of the neural network using gradients of the loss. In some embodiments, the target 3D rays are obtained by inverse projection of the 2D target keypoints onto a hemisphere or unit sphere centered at the camera center. In some embodiments, computing the angular error includes minimizing, for each keypoint, an angle between a normalized 3D direction vector and a target 3D ray. In some embodiments, the loss further includes a scaling factor based on at least one of a camera diagonal in pixels and a field-of-view derived from the camera intrinsics. In some embodiments, computing the loss includes excluding, from the loss, keypoints within a neighborhood around the camera center. In some embodiments, the angular error loss is used to train the neural network without using a multi-stage training procedure that separately trains with a Euclidean 2D reprojection loss. In some embodiments, the neural network estimates the body-model parameters using only the RGB image without requiring an input depth map.

In another aspect, the disclosure provides a system that detects self-collision and outputs physical plausibility indicators and/or corrections. The system may include one or more processors and a non-transitory memory storing instructions that, when executed by the one or more processors, cause the system to obtain pose parameters and shape parameters for a person; generate a posed 3D human mesh corresponding to the pose parameters and shape parameters; detect whether the posed 3D human mesh includes a self-collision by testing for intersecting mesh faces belonging to different body parts using a bounding volume hierarchy; and based on the detecting, output at least one of (i) a physical plausibility indicator for the posed 3D human mesh, and (ii) a rejection of the pose parameters. In some embodiments, different body parts are defined by assigning each mesh face to a body part based on at least one of skinning-weight maxima for vertices of the mesh face and bone influence regions of a skeletal rig. In some embodiments, self-collision detection includes a broad-phase intersection test performed on the bounding volume hierarchy and a narrow-phase triangle-to-triangle intersection test for candidate intersecting face pairs. In some embodiments, in response to detecting a self-collision, one or more joint rotations of the pose parameters are modified to reduce or eliminate the self-collision, optionally constrained by biomechanical joint limits defining feasible ranges of rotation for at least one skeletal rig. In some embodiments, the self-collision detection is applied to screen pose sequences obtained from a motion capture dataset prior to using the pose sequences to generate synthetic training images. In some embodiments, for a posed 3D human mesh that satisfies a physical plausibility indicator, the posed 3D human mesh is inserted into a 3D scene, an image of the 3D scene is rendered from a sampled camera viewpoint, and the rendered image is stored together with at least one annotation derived from the pose parameters and shape parameters.

In another aspect, the disclosure provides a computer-implemented method for generating a posed 3D human mesh using a differentiable parametric body model and a learned phenotype-to-deformation predictor. The method may include receiving a phenotype parameter vector comprising a plurality of interpretable phenotype parameters; providing the phenotype parameter vector as input to a trained neural network that outputs at least one of (i) blendshape coefficients for a set of prototypical blendshapes and (ii) per-vertex displacement vectors for a base mesh; generating a resting mesh by deforming the base mesh using an output of the trained neural network; generating a target rig by applying forward kinematics to a resting rig using pose parameters; and generating the posed 3D human mesh by applying skinning to the resting mesh based on a pose of the target rig relative to the resting rig, wherein the foregoing operations are differentiable. In some embodiments, the trained neural network is trained by minimizing a loss between meshes produced using a blendshape-matrix implementation and meshes produced using the trained neural network for matching phenotype parameters and pose parameters. In some embodiments, the phenotype parameter vector includes a reduced subset of phenotype parameters consisting of at least age, gender, height, weight, muscle, and proportions. In some embodiments, the trained neural network outputs per-vertex displacement vectors at a plurality of mesh resolutions, and a mesh resolution is selected based on at least one of available processing resources, a target frame rate, and a downstream application.

In another aspect, the disclosure provides a computer-implemented method for determining interpretable phenotype parameters of a parametric 3D human body model from 3D geometry. The method may include obtaining input 3D geometry comprising at least one of a mesh, a point cloud, and a depth-derived surface for a person; determining a phenotype parameter vector comprising interpretable phenotype parameters by at least one of (i) inputting the input 3D geometry into a trained neural network that outputs the phenotype parameter vector and (ii) performing an optimization that iteratively updates phenotype parameter values to reduce an objective function measuring a mismatch between the input 3D geometry and generated 3D geometry produced by the parametric 3D human body model as a function of the phenotype parameter values; and outputting the phenotype parameter vector for at least one of generating a 3D mesh using the parametric 3D human body model, annotating a dataset, and enforcing a morphology prior in an optimization. In some embodiments, the trained neural network is trained using synthetic training samples generated by rendering posed human meshes together with ground-truth phenotype parameters. In some embodiments, the method includes outputting a confidence value or uncertainty for at least one phenotype parameter. In some embodiments, an interoperability mapping is applied to convert a mesh generated from the phenotype parameter vector into a different mesh topology for evaluation on an external benchmark. In some embodiments, the phenotype parameter vector is regularized using a calibrated phenotype prior conditioned on at least age and gender.

In another aspect, the disclosure provides a computer-implemented method for generating a posed 3D human mesh using a plurality of skeletal rigs. The method may include storing a plurality of skeletal rigs for a common base mesh, the plurality of skeletal rigs including at least a first rig having a first number of bones and a second rig having a second number of bones greater than the first number of bones; receiving a rig-selection input indicating at least one of an application type, a performance constraint, and a desired fidelity; selecting, based on the rig-selection input, one of the plurality of skeletal rigs; generating, from pose parameters, a target pose for the selected skeletal rig; and generating a posed 3D human mesh by skinning a resting mesh using the selected skeletal rig. In some embodiments, the rig-selection input is derived from a mesh-quality input independent of an output mesh resolution. In some embodiments, pose parameters are retargeted from a first rig space to a second rig space by optimizing joint rotations subject to biomechanical joint limits. In some embodiments, a collision proxy model is output together with the posed 3D human mesh, the collision proxy model including a set of convex rigid bodies rigidly attached to bones of the selected skeletal rig. In some embodiments, generating the posed 3D human mesh includes applying a skinning procedure including at least one of linear blend skinning and dual-quaternion skinning.

In another aspect, the disclosure provides a computer-implemented method for generating physically plausible pose parameters for a parametric 3D human body model using a learned latent pose prior. The method may include training an autoencoder-based generative pose prior to encode pose parameters into a latent code and decode the latent code into pose parameters, wherein training uses a training set of pose parameters that satisfy at least one physical plausibility constraint including at least one of biomechanical joint limits and a self-collision constraint determined from a mesh generated using the pose parameters, and/or wherein training minimizes a loss that penalizes violation of the at least one physical plausibility constraint; sampling or optimizing a latent code to produce candidate pose parameters; and outputting pose parameters decoded from the latent code for use in at least one of synthetic data generation and inverse kinematics optimization. In some embodiments, motion-capture pose sequences are filtered using the self-collision constraint prior to training the autoencoder-based generative pose prior. In some embodiments, sampling or optimizing the latent code is conditioned on at least one of an activity label, an interaction label, and a scene context label. In some embodiments, the autoencoder-based generative pose prior is used as a regularizer term in an optimization that fits the parametric 3D human body model to image observations. In some embodiments, an annotation tool is operated that proposes an initial pose for an image using the autoencoder-based generative pose prior, receives user corrections to keypoints or mesh landmarks via a user interface, and re-optimizes pose and shape parameters using a differentiable body model. In some embodiments, the annotation tool stores, for each annotated image, at least one of pose parameters, phenotype parameters, a generated mesh, and an interoperability-converted mesh in a different topology. In some embodiments, the autoencoder includes at least one of a variational autoencoder, a deterministic autoencoder, and a normalizing flow model. In some embodiments, after sampling or optimizing the latent code, at least one constraint is enforced on the candidate pose parameters including at least one of biomechanical joint limits and a self-collision constraint determined from a mesh generated using the candidate pose parameters.

According to another aspect, a computer program product comprising code instructions to execute the computer-implemented method, when said program is executed on one or more of a computer, an autonomous vehicle, and an autonomous robot; and a computer-readable medium, on which is stored a computer program product comprising code instructions for executing the computer-implemented method.

The foregoing summary is provided to introduce a selection of concepts in a simplified form that are further described in the Detailed Description. The summary is not intended to identify key or essential features of the claimed subject matter, nor is it intended to be used to limit the scope of the claimed subject matter. Other aspects and advantages will become apparent from the following Detailed Description, the drawings, and the claims.

### DESCRIPTION OF THE DRAWINGS

The present disclosure will become more fully understood from the detailed description and the accompanying drawings, wherein:
Figure 1 illustrates an example system architecture in which the methods according to this disclosure may be performed;
Figure 2 is a functional block diagram of an example control system of an autonomous machine in which the methods according to the disclosure may be performed;
Figure 3 is a functional block diagram of the mesh module shown in Figure 2;
Figure 4 shows a detailed block diagram of the mesh module shown in Figure 2;
Figure 5 is a functional block diagram of a mesh module used in training a neural network model;
Figure 6 is a functional block diagram of inference using the neural network model trained in accordance with Figure 5;
Figure 7 illustrates an application for using the target mesh produced by the mesh module with clothing and 3D-scene blending;
Figure 8 sets forth a flow diagram for computing a differentiable parametric 3D human body model (DP-3D-HBM) in accordance with the block diagram of the mesh module;
Figure 9 illustrates examples of body meshes with various morphological characteristics;
Figure 10 illustrates an example of a skeletal rig;
Figures 11A and 11B illustrate examples of posed synthetic characters;
Figure 12 depicts samples from a dataset of 500k synthetic images; and
Figure 13 illustrates examples of a test dataset for testing full-body mesh recovery.

In the drawings, reference numbers may be reused to identify similar and/or identical elements.

### DETAILED DESCRIPTION

Three-dimensional (3D) digital representations of humans are increasingly used in computer vision, robotics, animation, and immersive applications. In particular, a discretized surface mesh (i.e., a mesh defined by vertices and faces) can represent the full surface geometry of a person and can capture information that may not be available from skeletal keypoints alone, such as body volume, silhouette, and surface proximity to surrounding objects. As a result, human surface meshes are used in applications including, by way of example, collision-aware navigation and interaction for autonomous machines, human-robot interaction and gesture understanding, motion analysis and posture studies, and generating or controlling personalized avatars in augmented or virtual reality environments.

One approach for representing a human surface mesh is to use a parametric body model that converts a compact parameterization of shape and pose into a full 3D mesh. In this context, "pose" generally corresponds to a skeletal configuration (e.g., joint rotations and a root pose), while "shape" describes morphological characteristics (e.g., height, weight distribution, proportions). Parametric models are particularly useful when they are differentiable, because they can serve as a "mesh layer" within learning-based systems (e.g., neural networks trained to infer human meshes from images) and within optimization-based systems (e.g., inverse kinematics and model fitting).

However, certain parametric body models and certain pipelines using such models present several technical limitations that hinder practical deployment across diverse environments and populations.

A first technical limitation relates to population coverage and generalization. Various models represent shape using latent coefficients learned from limited 3D scan datasets. Such datasets are costly and time-consuming to acquire, and are frequently incomplete with respect to demographic diversity, such as children and infants, elderly individuals, and body morphologies not well represented in the source scan populations. As a result, models trained or tuned to such scan distributions may underperform when deployed on diverse real-world populations. Some systems attempt to address this by using separate model variants for different body categories (e.g., infants versus adults, or separate male/female templates), but this can introduce additional complexity and failure modes, such as requiring a separate classifier to select a model variant and producing inconsistent outputs when the incorrect variant is chosen.

A second technical limitation relates to interpretability and controllability of shape parameters. In certain models, shape parameters are not directly interpretable (e.g., principal components or other latent variables). This can be problematic in practice because downstream systems and annotation workflows often require an operator or developer to specify or constrain intuitive attributes-such as "age," "height," "weight," "muscle," or other semantically meaningful traits-rather than abstract coefficients. Lack of interpretability can also impede dataset generation, debugging, and downstream "scene understanding" tasks where the system benefits from explicit, human-readable morphological descriptors.

A third technical limitation relates to computational complexity and pipeline integration. Certain approaches incorporate additional pose-dependent surface correction stages (e.g., corrective deformations) to mitigate skinning artifacts. While such corrections can improve realism in certain cases, they may also increase computational cost and add complexity, which may be impactful in compute-constrained environments (e.g., robots and embedded devices) and in training pipelines where speed is important.

A fourth technical limitation relates to training data availability and diversity for human mesh recovery (HMR). Training robust HMR systems typically requires a large corpus of images with accurate 3D ground truth meshes. Real-world datasets with accurate mesh ground truth are limited, and 3D scan data and the corpus of images that may be otherwise used as training date, is sensitive biometric information, raising privacy and compliance concerns. Further, even where mesh ground truth is available, it may not cover the range of real-world imaging conditions (e.g., wide field-of-view variation, crowded scenes, occlusions, diverse backgrounds) and may not cover the desired distribution of body shapes (e.g., children).

A fifth technical limitation relates to training stability in learning-based HMR pipelines. Certain training losses frequently rely on direct 2D reprojection of predicted 3D points through a pinhole camera model and comparison to 2D target keypoints. Such reprojection can become unstable or discontinuous when predicted points approach or cross the camera plane, which may require multi-stage training procedures and delayed activation of certain loss terms.

A sixth practical limitation relates to interoperability with existing benchmarks, tools, and mesh ecosystems. In practice, many datasets and evaluation protocols assume a particular mesh topology or a particular body model family. Even when a new model is advantageous, lack of reliable conversion between mesh topologies can create adoption barriers and can complicate fair evaluation.

The present disclosure addresses these technical limitations by providing a differentiable parametric 3D human body model (referred to herein as a DP 3D HBM) and associated methods and systems that generate a target 3D mesh from an interpretable target shape description and pose parameters. The disclosed DP 3D HBM may be designed to be practical for both learning-based and optimization-based applications, and to support scalable dataset generation and robust HMR training, including in diverse populations such as children.

In an embodiment, the DP 3D HBM may generate a posed target mesh through a single differentiable computation flow comprising: applying shape parameters to a base mesh to define a resting mesh adjusted based on an interpretable target shape description. A target rig may be generated by applying forward kinematics to a resting rig using 3D target pose parameters. Furthermore, a target mesh may be generated using blend skinning by deforming the resting mesh based on a pose of the target rig relative to the resting rig. This flow may provide a practical "mesh module" that can be executed on one or more processors and used as a differentiable layer in machine learning frameworks, enabling end-to-end gradient propagation for training and optimization.

In various embodiments, the target shape description may be expressed using semantically meaningful phenotype parameters (also referred to as "phenotypes"), such as age, gender, height, weight, muscle amount, proportions, and/or other global or local morphological traits. In a representative embodiment, the phenotypes may be mapped to mesh deformations by computing blendshape coefficients and combining prototypical blendshapes to generate vertex displacements for a resting mesh. In some embodiments, a structured interpolation strategy (e.g., piecewise multi-linear interpolation among prototypical blendshapes within phenotype subsets) may be used to encourage plausible continuous variations across the phenotype space. This enables consistent generation of human meshes across a wide range of body types, including across ages from infants to elders, within a single model representation.

The present disclosure may also provide several technical effects relative to typical scan-learned or non-interpretable parametric models.

First, by using semantically meaningful phenotypes such as shape parameters, the DP 3D HBM may improve interpretability and controllability of the shape space. This supports practical workflows where a user, developer, or downstream system may specify intuitive traits, and supports downstream tasks that benefit from explicit semantic attributes (e.g., estimating age/height as part of multi-person scene understanding).

Second, by supporting broad phenotype coverage-including age variation-within a single model, the DP 3D HBM can reduce reliance on separate model variants for different populations, thereby reducing engineering overhead and reducing failure modes associated with selecting a model variant. This unified representation may be particularly advantageous for HMR pipelines that must handle both children and adults using a common inference head.

Third, in certain embodiments the posed mesh may be produced without requiring an additional pose-dependent corrective surface deformation stage. For example, the disclosed system may use skinning procedures such as dual-quaternion skinning to preserve volume and reduce common skinning artifacts while maintaining computational efficiency. This can reduce forward-pass complexity and improve suitability for real-time and embedded applications.

Fourth, because the DP 3D HBM can be implemented using assets and morphological knowledge derived from artist-defined character modeling (rather than being tied to sensitive 3D scan datasets), the disclosed approach can reduce privacy exposure and can facilitate large-scale generation of diverse human meshes without requiring collection of large biometric scan datasets.

Fifth, the disclosed approach may enable scalable data generation and robust HMR training by pairing the DP 3D HBM with synthetic data pipelines that render diverse scenes, poses, and body shapes, and store exact ground truth DP 3D HBM parameters and meshes. This directly addresses the scarcity of accurate mesh ground truth data and improves generalization to real-world diversity, including diverse camera intrinsics and crowded scenes.

Sixth, the present disclosure provides a stabilized 2D supervision formulation for HMR training, based on angular error between predicted 3D directions and target rays obtained by inverse projection of 2D keypoints, which can reduce discontinuities associated with direct reprojection and can enable earlier and more stable use of 2D supervision in training.

Seventh, the disclosure provides interoperability techniques for mapping between mesh topologies, enabling practical adoption and evaluation. For example, a sparse mapping may be trained to regress vertex coordinates from a DP 3D HBM mesh topology to a second mesh topology, initialized using barycentric projection and refined using optimization while enforcing desirable constraints such as left/right symmetry. This supports evaluation on external benchmarks and integration with existing toolchains that assume other mesh topologies.

The presented disclosure encompasses various non-limiting embodiments, each providing distinct technical advantages.

In some embodiments, a mesh module may receive an interpretable target shape description (e.g., phenotype parameters) and a target pose description (e.g., joint rotations and root pose) and may output a posed target mesh using the differentiable computation flow described above. This may provide a standalone forward model that can be used directly in graphics pipelines, simulation, robotics, and analytic systems.

In some embodiments, a neural network may be trained to infer DP 3D HBM parameters from one or more images (e.g., RGB images). During training, the network output parameters may be passed through the DP 3D HBM to generate a mesh or derived 3D points, and loss terms are computed with respect to supervision such as keypoints, silhouettes, mesh targets (e.g., from synthetic data), or multi-view consistency. This may provide a practical HMR system that outputs a full-body mesh, while retaining interpretable shape outputs.

In some embodiments, a 2D supervision loss may be computed using angular error between predicted 3D directions and target rays derived by inverse projection of 2D targets through camera intrinsics. This may improve stability relative to direct reprojection losses and can reduce or eliminate the need for delayed activation of 2D losses, thereby simplifying training schedules.

In some embodiments, a dataset generator may sample diverse phenotypes and poses, generate corresponding meshes with the DP 3D HBM, and (optionally) may augment the meshes with clothing and other assets, place multiple humans into realistic scenes, and render images from multiple camera viewpoints and intrinsics. The generator may store exact ground truth parameters and meshes alongside the rendered images. This may provide large-scale training data for HMR that includes broad shape diversity, including children, and that can include difficult scene configurations.

In some embodiments, during dataset generation and/or fitting, the system may apply physical plausibility criteria, such as biomechanical joint limits and self-collision checks, to reject or flag implausible samples. In addition, the system may output a collision proxy model (e.g., rigid convex bodies attached to bones) for downstream collision detection and simulation. This may be particularly advantageous for robotics navigation and interaction systems.

In some embodiments, the system may store multiple skeletal rigs compatible with a base mesh and may output meshes at different resolutions. Rig and/or resolution may be selected based on application constraints such as latency, compute budget, and desired fidelity, allowing the DP 3D HBM to support both real-time applications and higher-fidelity avatar/animation applications.

In some embodiments, a sparse regression mapping between mesh topologies may be generated and stored, allowing meshes produced by the DP 3D HBM to be converted to other mesh topologies used by external tools or benchmarks, and optionally vice versa. This embodiment supports practical evaluation and deployment where legacy systems require other mesh formats.

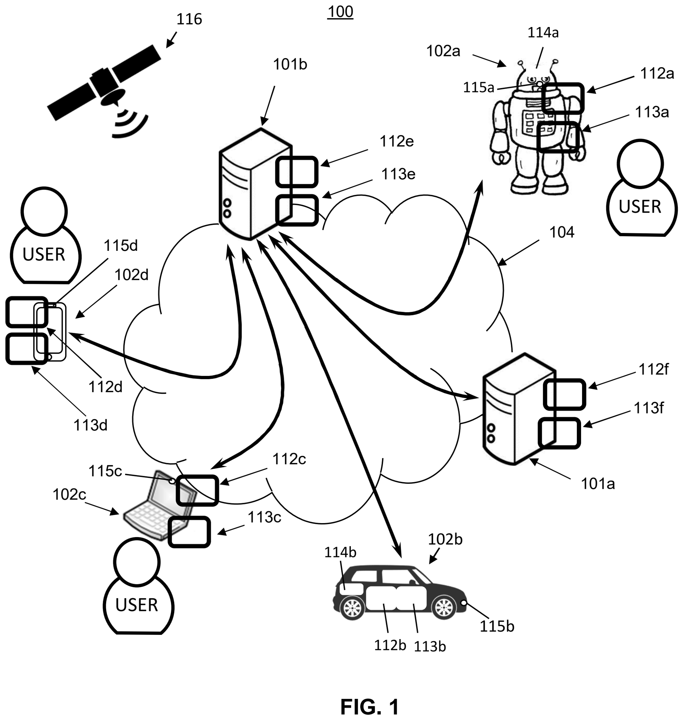

The following sections provide example implementations and architectures for carrying out the techniques described above. Turning now to the drawings, Figure 1 illustrates an example system architecture in which the disclosed DP 3D HBM mesh generation methods and associated training/inference pipelines may be performed, including example client devices for acquiring images and example computing systems for executing the mesh module and, in certain embodiments, training and running HMR neural network models.

### Section A. System Architecture

The disclosed methods for generating a differentiable parametric 3D human body model ("DP-3D-HBM", e.g., mesh), and used in applications therefor, may be implemented within a system 100 architected as illustrated in Figure 1, which comprises servers 101 and one or more client devices 102 that communicate over a network 104 (which may be wireless and/or wired) such as the Internet for data exchange. Servers 101 and the client devices 102 include one or more processors 112 (shown in Figure 1 as processors 112a-f of client devices 102a-d and servers 101e-f, respectively) and memory 113 (shown in Figure 1 as memory 113a-f of client devices 102a-d and servers 101e-f, respectively) such as a hard disk. The client devices 102 may be any device that communicates with servers 101, including autonomous robot 102a, autonomous vehicle 102b, computer 102c, or cell phone 102d, which may be equipped with an imaging device 115 for acquiring images of a scene (i.e., a device for acquiring images or video, such as cameras and cell phones, shown in Figure 1 as imaging devices 115a-d of client devices 102a-d). In some embodiments, autonomous robot 102a and autonomous vehicle 102b may be located using positioning system 114a and 114b, respectively, communicating with geo-positioning system (GPS) 116, or, alternatively or in combination with, a cellular positioning system, an indoor positioning system (IPS), including beacons, RFID, WiFi and geomagnetic, or a combination thereof.

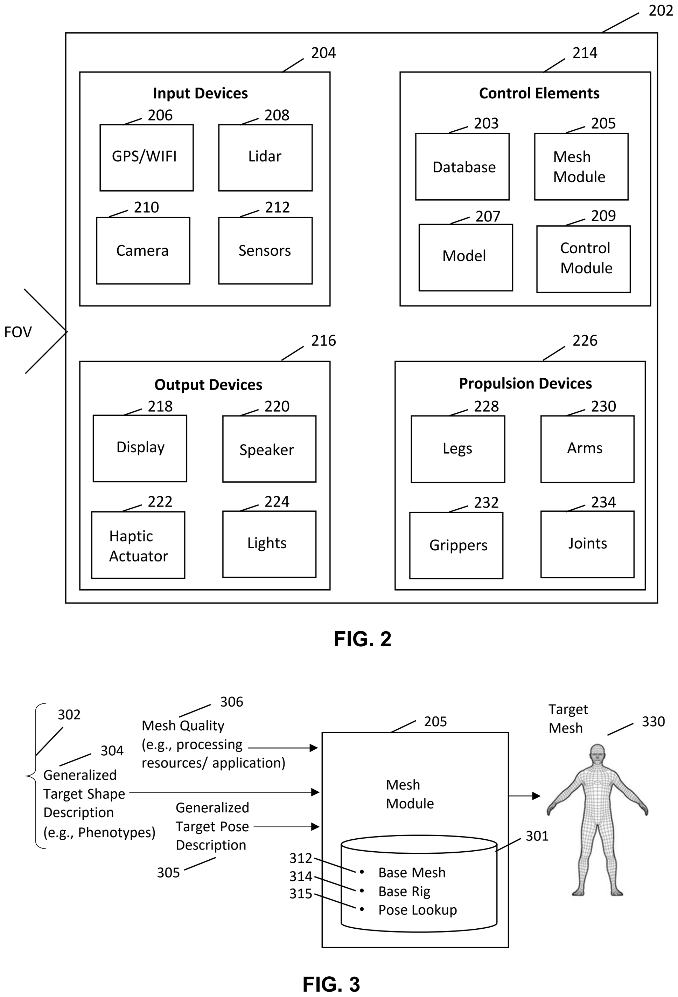

Figure 2 is a functional block diagram of an example control system of an autonomous machine 202, such as autonomous robot 102a or autonomous vehicle 102b shown in Figure 1. The autonomous machine 202, which may be mobile or stationary and indoor or outdoor, and may include one more of the following elements: input devices 204 (e.g., GPS/WIFI 206, Lidar 208, camera 210 (which may include be grayscale, or RGB sensors for capturing images within a predetermined field of view (FOV), or which may update (capture images) at a predetermined frequency, such as 60 hertz (Hz), 120 Hz, or another suitable frequency), sensors 212 (e.g., temperature, rain, force, torque)), control elements 214, output devices 216 (e.g., display 218, speakers 220, haptic actuator 222, lights 224), and propulsion devices (e.g., legs 228, arms 230, grippers 232, and joints 234).

In some embodiments, the server 101b (with processors 112e and memory 113e) shown in Figure 1 may include a mesh module 205, a database 203, neural network model 207 and a control module 209 in memory 113e containing functionality for controlling autonomous machine 202, and the server 101a. In alternate embodiments, the elements 209, 205, 207 and 203 may be implemented in memory 113 of the autonomous machine 202, or a combination thereof (e.g., element 209 implemented in memory 113 of the autonomous machine 202 and elements 205, 207 and 203 implemented in memory 113f on server 101a). In another embodiment, it is noted that the two servers 101a and 101b may be merged.

The autonomous machine 202 may be powered, such as via an internal battery and/or via an external power source, such as alternating current (AC) power. AC power may be received via an outlet, a direct connection, etc. In various implementations, the autonomous machine 202 may receive power wirelessly, such as inductively. In alternate embodiments, the autonomous machine 202 may include alternate propulsion devices 226, such as one or more wheels, one or more treads/tracks, one or more propellers, and/or one or more other types of devices configured to propel the autonomous machine 202 forward, backward, right, left, up, and/or down. In operation, the control module 209 actuates the propulsion device(s) 226 to perform tasks.

### Section B. Mesh Generation Method

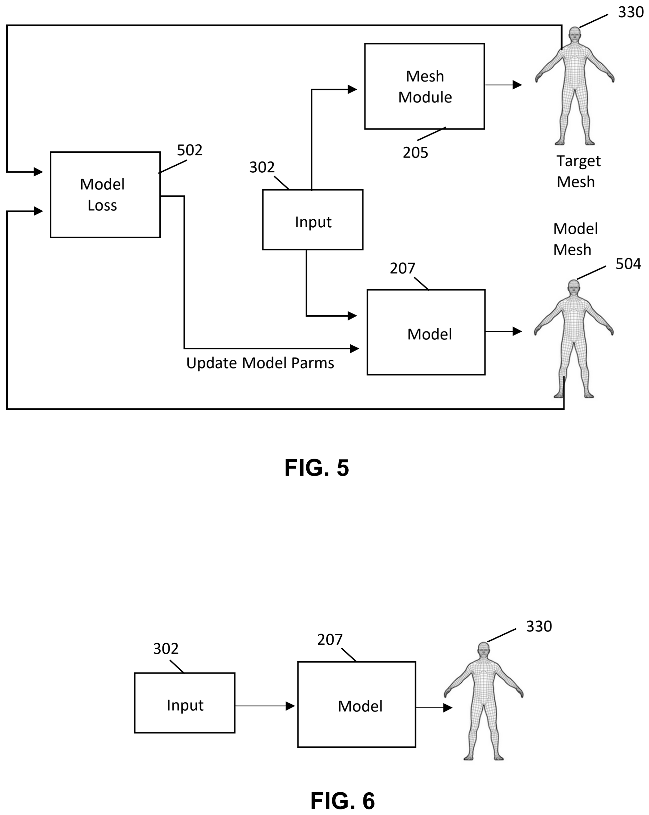

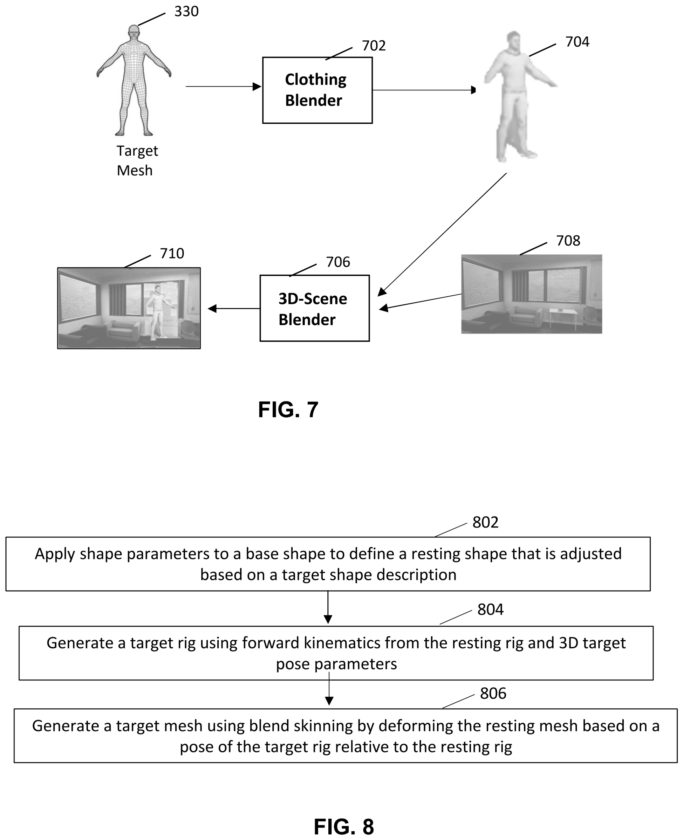

Figure 3 is a functional block diagram of mesh module 205 shown in Figure 2 for computing a differentiable parametric 3D human body model ("DP-3D-HBM", e.g., mesh) according to the method in Figure 8, which module 205 may be used in training a neural network model 207 as shown in Figure 5, which trained neural network model 207 may be used in inference as shown in Figure 6. The DP-3D-HBM model may be used to represent a broad spectrum of body shapes of any age from babies to elders with explicit, semantically meaningful parameters, which makes them intuitive for humans to interpret and adjust. In addition, the use of a body model that relies on artistic renderings of humans alleviates certain privacy concerns by avoiding the use of a collection of 3D human body scans. Advantageously, using the DP-3D-HBM model together with a synthetic data pipeline, data for diverse body types at scale may be generated and used to train Human Mesh Recovery (HMR) methods.

As shown in Figure 8, the single computation flow for computing target mesh 330 includes: at 802, applying shape parameters to a base shape to define a resting shape that is adjusted based on a target shape description; at 804, generating a target rig using forward kinematics from the resting rig and 3D target pose parameters; and at 806, generating a target mesh using blend skinning by deforming the resting mesh based on a pose of the target rig relative to the resting rig.

Referring again to Figure 3, the mesh module 205 shown includes stored data 301. Input 302 to the mesh module 205 includes an interpretable description of target shape 304 and target pose 305, and (optionally) a desired mesh output quality 306. Advantageously, the input 302 is described at a high-level (i.e., abstracted from programming details), which allows a user without special training to use mesh module 205 to generate a target mesh 330 without special knowledge, although any user may, with sufficient programming knowledge, choose to operate the mesh module at a lower level (i.e., directly specifying programming details).

As used herein a mesh, such as target mesh 330, refers to a discretized representation of a two-dimensional surface. A mesh may be defined by a set of elementary faces, typically triangles or quadrilaterals, that are connected to each other to compose the surface of the mesh. Corners of these elementary faces are referred to as vertices and their sides are referred to as edges. Vertices may be represented using 3D key points, and some vertices may be shared among multiple faces. A deformation of a mesh surface may be modeled by a displacement of its vertices, which is referred to herein as a 3D vertex displacement (also referred to herein using the symbol *O*). A 3D vertex displacement may be represented by a set of 3D vectors associated with each vertex of a mesh.

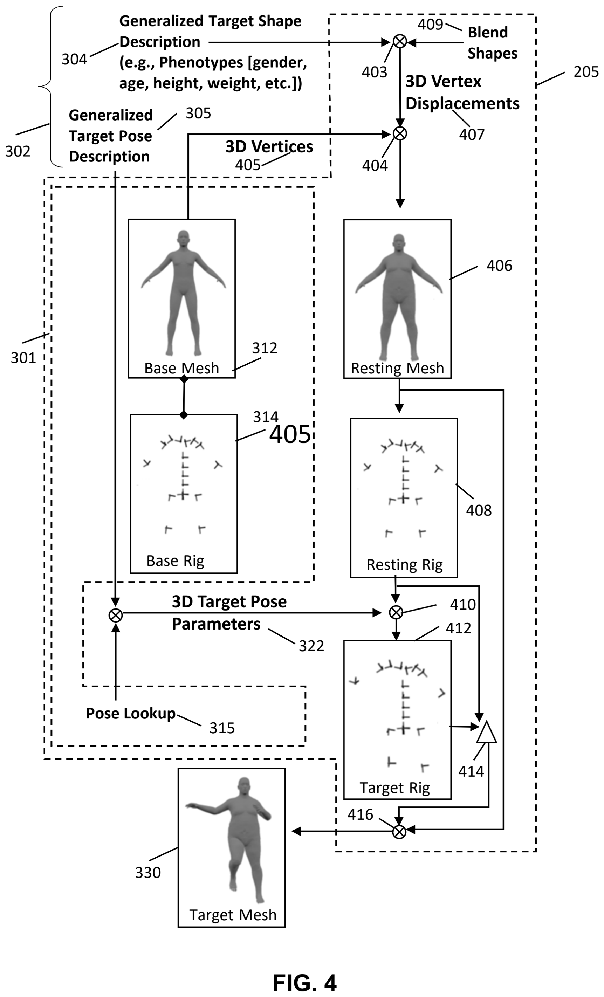

The method shown in Figure 8 for computing a target mesh 330 is shown in Figure 4 in greater detail in the context of the input 302 and the mesh module 205 shown in Figure 3, where inputs 302 include generalized descriptions of shape parameter input 304 and pose parameter input 305, and output includes target mesh 330 which may be a posed human representation. In some embodiments, generalized target shape description 304 may be described using phenotypes that are translated to 3D vertex displacements 407. Inputs 302 also include a pose description 305 from which 3D target pose parameters of bones and joints of a skeletal rig may be derived, which may in some embodiments be described by the pose of the root bone of a body model, and a 3D rotation at each joint between two connected bones relative to their rest configuration.

The 3D vertex displacements 407 may be derived at 403 from the generalized target shape description 304 that may be used to define interpolation coefficients for blend shapes 409 corresponding to each phenotype provided as input (e.g., age, weight, gender, nose curvature, etc.). Generally, each blend shape describes a deformation from a base (or neutral) shape. The location of vertices of a base mesh after deformation may be obtained by applying 3D vertex displacements to each vertex of the base mesh. A blend shape is in effect a 3D vertex displacement that models a particular deformation of the surface of a base mesh. For example, different blend shapes for a body describe different sizes, heights, and other morphological differences (e.g., a blend shape may be used to model the deformation of the base gender-neural mesh into a male who is old, tall, and underweight). In some embodiments, over five hundred blend shapes may be used to model general deformations (e.g., short, tall, etc.), and over one thousand blend shapes are used to model specific deformations (e.g., arm length, facial specificities, etc.).

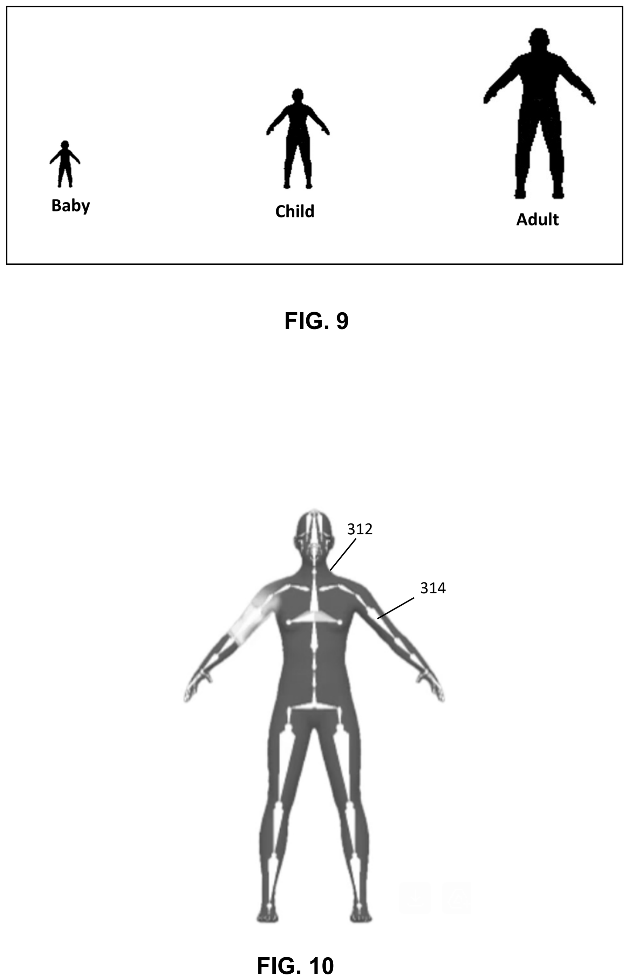

In some embodiments, the blend shapes considered at 403 may be organized into subsets (i.e., more refined phenotypes) of 3D vertex displacements that allow modeling specific morphological characteristics (i.e., less refined phenotypes) by interpolating between blend shapes within a subset of blend shapes. Such phenotypes include for example: (i) age that may be modeled by a subset of three prototypical blend shapes (e.g., baby, child, adult); (ii) gender and (iii) height. Additional phenotypes may describe more detailed and subtle characteristics such as the size of an ear lobe that may be controlled using two or more prototypical blend shapes. Figure 9 illustrates examples of body meshes with various morphological characteristics obtained using this approach for the subset of blend shapes baby, child, and adult modeled from the phenotype age.

In some embodiments, multiple blend shapes that model a large variety of human morphology may be provided by MakeHuman (see wikipedia.org/wiki/MakeHuman, which is incorporated herein by reference). MakeHuman includes a full-body template mesh, with blend shapes that allow artists to model a large variety of human-like characters. The base template mesh of MakeHuman may be composed of 13,380 vertices and 13,378 quadrilateral faces (excluding tongue and eyes), assigned with weights to a default rig of bones. Further, in MakeHuman the diversity of human morphology may be captured through various parameters, which are referred to herein as phenotypes. These phenotypes may represent high-level characteristics, such as age, gender, weight, muscle amount, etc., as well as more local changes, such as head size. Phenotypes may be grounded into a set of prototypical blend shapes, each modeling a 3D human mesh with particular characteristics (e.g., a female baby having small muscle, average weight, and large height). In one implementation, nine high-level phenotypes (e.g., gender, age, muscle, weight, height, proportions, cup-size, firmness, and race) are considered. While other implementations may consider additional phenotypes, these nine high-level phenotypes are able to cover a shape diversity beyond the discriminative capabilities of existing HMR methods.

To model a continuum of deformations, displacements of multiple blend shapes may be combined together, potentially amplifying and/or reducing different ones of the continuum of deformations. In an embodiment, this may be done by defining for each blend shape a scalar coefficient at 403 by considering a linear combination of blend shapes 409 as the 3D vertex displacements. These scalar coefficients may be determined to interpolate between blend shapes 409. In order to ensure that plausible deformations are produced, these scalar coefficients may be limited to values between zero and one.

More generally, the shape of a mesh may be controlled by semantically meaningful scalar coefficients that correspond to selected phenotypes (e.g., age, weight, gender, etc.). To map a set of such coefficients to a shape-adjusted human model in rest pose, coefficients are used to weight a piecewise-multilinear interpolation between prototypical blend shapes. For instance, for a parameter value age=0.5, blend shapes corresponding to the phenotypes child (age=1/3) and young (age=2/3) may contribute equally to the mesh deformation. This use of piecewise interpolation yields a structure of the shape parameter space that may be used to consistently generate plausible human meshes.

In some embodiments, instead of determining blendshape coefficients solely by table lookup and piecewise interpolation among prototypical blendshapes, the system may use a trained neural network to predict blendshape coefficients and/or per vertex displacement vectors from a reduced dimension phenotype vector comprising interpretable phenotype parameters. In some embodiments, the trained neural network may output (i) a vector of blendshape coefficients associated with prototypical blendshapes and/or (ii) a vertex displacement tensor that is applied to the base mesh to generate the resting mesh, while preserving differentiability for gradient based learning and optimization.

In some embodiments, the trained neural network may be trained using supervision generated by a reference implementation that applies prototypical blendshapes using explicit coefficients, such that training minimizes a loss between (i) a resting mesh and/or posed mesh produced by the reference implementation and (ii) a resting mesh and/or posed mesh produced by the trained neural network for the same phenotype parameters and pose parameters. In some embodiments, the loss may include a per vertex distance loss and optionally a normal consistency loss.

In some embodiments, the trained neural network may predict displacements and/or blendshape coefficients at a plurality of mesh resolutions, such that the system can select a resolution based on available compute resources, required frame rate, or a downstream task, while preserving consistency of body shape across resolutions.

With reference to Figure 4, resting mesh 406 is a mesh obtained after deformation of a base mesh 312 that may be computed at 404 using a list of 3*D* vertex displacements *O* ∈ *R*^{3×*N*} 407 associated with *N* vertices 405 of the base mesh 312 with coordinates *Xₜ* ∈ *R* × *N.* Vertex coordinates *X_{b}* of the *N* vertices of resting mesh 406 may be computed after applying the list of 3D vertex displacements 407 to the vertex coordinates *Xₜ* of the *N* vertices of base mesh 312 as *X_{b} = Xₜ +O.* In an implementation, multiple blend shapes 409 (*Oⱼ*)_{*j=*1...*B*} considered at 403 with generalized target shape descriptions 304 may be linearly blended (i.e., morphed) together with different interpolation coefficients (*αⱼ*)_{*j=*1*...B*} to model a variety of deformations, leading to vertex coordinates *X_{b}* of resting mesh 406 using the following equation: ${X}_{b} = {X}_{t} + {\sum }_{j = 1}^{B} {α}_{j} {O}_{j} .$ In an alternate embodiment, extrapolation may be used instead of interpolation to define the scalar coefficients.

By way of summary, after the blend shapes are considered at 403 with generalized target shape descriptions 304, 3D vertex displacements 407 may be computed, which are used to describe a deformation of the base mesh 312 that is used to compute the resting mesh 406 by applying at 404 to the 3D vertices 405 of the base mesh 312, the 3D vertex displacements 407. Generally, blend shapes 409 of a base mesh 312 may be used to generate a shape-adjusted human model (e.g., resting mesh 406); once blend shape coefficients are determined (e.g., based on the target shape description 304), they may be applied to the base mesh 312 using the Equation (1) above to produce the resting mesh 406 with a given morphology corresponding to the generalize target shape description 304.

A skeletal rig (i.e., rig), such as base rig 314 included with stored data 301, may be used for binding base mesh 312 to a skeletal hierarchy of bones and joints to enable target mesh 330 to have a pose and articulate, where 3D vertices of the base mesh 312 may be associated to different bones and different skinning weights (which indicate how 3D vertices of a mesh are influenced by the bones of a rig). In other words, a skeletal rig, such as base rig 314, may be used to represent a skeleton of bones to which 3D vertices of base mesh 312 are attached, as shown in Figure 10. In some embodiments, the skeleton is composed of a set of bones connected to each other along a kinematic tree, where one bone is defined as root bone of the tree. To encode a new pose, the pose of the root bone is given, together with 3D rotations at each joint between connected bones, relative to their rest configuration.

Resting rig 408 is computed from the resting mesh 406 using the 3D vertex displacements 407 and the bones from which the resting mesh is associated (e.g., a set of 3D vertices may be associated with a wrist bone/joint and the location of the wrist bone/joint may be estimated using those 3D vertices).

At 410, target rig 412 is generated using forward kinematics from the resting rig 408 and 3D target pose parameters 322. In some embodiments, the 3D target pose parameters are derived from the generalized target pose description using a pose lookup 315 (which in some embodiments may be a lookup table) that relates textual descriptions of poses for the base rig 314 of the selected base mesh 312. The 3D target pose parameters 322 effectively changes a generic pose of the resting rig 408 to a specific pose in the target rig 412.

Target mesh 330 is computed by rotating, moving and deforming the resting mesh 406 to correspond with the pose of the target rig 408 using a blend skinning model, which transforms the resting mesh 406 based on the relative offset (computed at 414) between the positions and orientations of the bones of the resting rig 408 and the target rig 412 and skinning weights (which indicate the influence 3D vertices of a mesh are influenced by the bones of a rig).

Blend skinning at 416 involves deforming resting mesh 406 using a blend skinning function to produce target mesh 330, shaped and posed accurately according to the target pose 305. More specifically, the skinning procedure, which may be based on skinning weights of each 3D vertex, may be used to compute the coordinates of each 3D vertex of the target mesh 330, using a linear blend skinning function. In some embodiments, the skinning procedure comprises dual-quaternion skinning instead of, or in addition to, linear blend skinning, for example to reduce skinning artifacts and better preserve volume under large joint rotations. In order to correct skinning artefacts in some embodiments, different blend skinning functions may be used such as dual-quaternion blend skinning function (see for example Kavan et al., "Skinning with dual quaternions", in Proceedings of the 2007 Symposium on Interactive 3D Graphics and Games. Association for Computing Machinery, 2007, which is incorporated herein by reference).

### Section C. Features, Applications, Constraints and Advantages

*Section C.1 Differentiable parametric model:* Advantageously, the target mesh 330 output by mesh module 205 is generated using a fully differentiable parametric model, which may be adapted for use in numerous learning-based and optimization-based applications. The model used to define target mesh 330 output by mesh module 205 may be implemented in a fully differentiable manner using PyTorch to make it practical and simple to use in gradient-based applications such as machine learning (e.g., human mesh recovery from images), or for gradient-based optimization (e.g., for inverse kinematics or 3D registration) to train a neural network model 502 as shown in Figure 5. That is, since the operation of mesh module 205 is differentiable end-to-end (i.e., it is a single computational flow) for computing target mesh 330, neural network models (such as neural network model 207) may be trained by adjusting their model parameters (e.g., using gradient-based optimization methods) with a loss, such as loss 502, computed using a loss function that adapts to parametric changes to model mesh 504 to achieve the target mesh 330, as shown in Figure 5.

*Section C.2 Bio-mechanical constraints:* A feasible range of rotations representative of typical bio-mechanical constraints may be defined for each body joint. These ranges may be used to define parametrizations in downstream applications that prevent poses that are unfeasible for a 'normal' person, or as a constraint in optimization procedures.

*Section C.3 Collision model:* a collision model may be output in place or in complement of the target mesh. Such a model may consist of a set of multiple convex rigid bodies (capsules, 3D boxes), rigidly attached to bones of the kinematic skeleton, which notably may be useful for physics simulation and interpenetration detection.

*Section C.4 Multi-resolution mesh:* As part of input 302 to mesh module 205 is (optionally) a mesh quality input 306 to allow mesh module 205 to determine the output resolution of the target mesh 330. In doing so, mesh module 205 may consider trade-offs between speed and having a detailed mesh representation. In addition with mesh quality input 306, a user may additionally specify as input (i) available processing and/or resources, (ii) intended use/application, and (iii) desired completion time, which may all be taken into account in proposing the highest mesh quality that may be achieved given one or more of the additional inputs.

In some embodiments, the system may store a plurality of skeletal rigs compatible with a given base mesh, including at least a coarser rig (fewer bones/joints) and a finer rig (more bones/joints, optionally including fingers and/or facial joints). In some embodiments, the optional mesh quality input and/or an application descriptor may be used to select among the plurality of rigs, such that lower latency applications may select the coarser rig and higher fidelity applications may select the finer rig.

In some embodiments, when switching between rigs, pose parameters may be retargeted from a first rig space to a second rig space by solving an optimization that minimizes differences between (i) joint positions and/or landmark vertex positions produced by the first rig and (ii) corresponding joint positions and/or landmark vertex positions produced by the second rig, subject to biomechanical constraints defining feasible joint rotation ranges for the selected rig.

In some embodiments, selection of a skeletal rig and selection of an output mesh resolution are performed independently, such that an application may select any combination of (i) rig complexity and (ii) mesh resolution. For example, a high-resolution mesh may be selected with a rig having relatively few bones to improve surface fidelity while limiting pose degrees of freedom, and a low-resolution mesh may be selected with a rig having relatively more bones to reduce vertex processing cost while enabling a richer pose articulation.

*Section C.5 Clothing and 3D-Scene Blending:* As shown in Figure 7, given target mesh 330 known blenders such as clothing blender 702 may be used to add clothing to the target mesh 330 to generate clothed target mesh 704. In addition, a 3-D scene blender 706 may be used to insert the clothed target mesh 704 into a scene 708 to generate 3-D scene 710.

*Section C.6 Navigation in Crowded Environments:* For robots operating in crowded spaces, the mesh module 205 may be integrated into existing multi-person 3D pose estimation methods (as disclosed in US Patent Application Serial Nos. 18/987,215 and 18/944,362) contributing to a collision-avoidance pipeline that allows robots to move safely in dense environments. Additionally, the mesh module 205 may assist in co-navigation tasks, where a robot follows or guides a user, checking if the person is paying attention or following along.

*Section C.7 AR*/*VR:* The proposed parametric 3D model enables the precise capture of facial and hand details, which is crucial for applications in augmented and virtual reality (AR/VR). Human body meshes generated by the mesh module 205 can be edited or animated, enhancing the realism and interaction in these environments.

*Section C.8 Human-Robot Interaction:* Understanding human poses, gestures, and facial expressions is vital for Human-Robot Interaction (HRI) applications. The mesh module 205 can also contribute to the understanding of object manipulation or human-human interactions based on image or video data.

*Section C.9 Advantages:* Advantageously, the DP-3D-HBM model and systems includes the use of (i) a parametric 3D model that can represent humans across many demographics, from infants to seniors; (ii) the input shape parameters are intuitive and interpretable and easy to define from the user's perspective (e.g., users can define precise traits such as age, gender, and height, and the model will adjust the 3D human accordingly); (iii) the parametric 3D model is compatible with multiple skeletal rigs, making it adaptable to various applications, facilitating easy integration with existing motion capture and rendering systems; (iv) the model accounts for bio-mechanical constraints; (v) the parametric 3D model computes collisions efficiently; (vi) the input of the parametric 3D model enables the user to choose the resolution of the output mesh; and (vii) the parametric 3D model may be adapted to produce target mesh 303 for other animals than humans (e.g., dogs, cats, etc.) or humanoid robots (or more generally animal robots).

*Section C.10 Example downstream use of the trained neural network model.* In some embodiments, the trained neural network model (e.g., neural network model 207) is used to process sensor data (e.g., one or more RGB images captured by camera 210 or imaging device 115) and output an inference result that comprises estimated parameters of the differentiable parametric 3D human body model (e.g., pose parameters and shape/phenotype parameters) for one or more persons detected in the sensor data. The estimated parameters may be provided to mesh module 205 to generate a corresponding posed 3D mesh (e.g., target mesh 330) and/or derived 3D keypoints or body-part volumes in a common coordinate frame (e.g., a camera frame and/or a world frame). The generated 3D mesh and/or derived quantities may then be consumed by a downstream technical module to perform a downstream operation (i.e., a technical operation), such as machine control, collision avoidance, tracking, or real-time rendering. As used herein, a 'downstream operation' refers to the downstream operation performed by a downstream module based on the posed 3D human mesh, the downstream operation producing a technical effect, including at least one of machine control, collision avoidance or motion planning, tracking, and real-time rendering.

*Section C.10.1 Robot navigation and collision-aware motion planning.* In one example embodiment, an autonomous robot (e.g., autonomous machine 202) operates in an environment that contains one or more humans. The robot captures, at a predetermined frequency, image frames from an onboard camera. For each image frame, the trained neural network model processes the image frame and outputs body-model parameters for each detected person. Using the body-model parameters, mesh module 205 generates a posed 3D mesh for each person and determines one or more geometric safety representations, such as (i) a body-part occupancy volume derived from the mesh faces or vertices, (ii) a simplified collision proxy model rigidly attached to a skeletal rig, and/or (iii) a predicted near-term swept volume determined from successive inferred poses. A control module (e.g., control module 209) updates a navigation plan to maintain a minimum separation distance between the robot and the safety representations and/or to avoid predicted interpenetration between the robot and the human meshes. The robot then controls one or more actuators (e.g., legs 228, arms 230, grippers 232, joints 234) based on the updated navigation plan. In this manner, the neural network output is used to improve collision avoidance and safe navigation in crowded environments.

*Section C.10.2 Vehicle navigation and pedestrian-aware path control.* In another example embodiment, an autonomous or driver-assistance vehicle captures image data from one or more cameras. The trained neural network model estimates body-model parameters for pedestrians and outputs 3D meshes and/or 3D keypoints in a vehicle coordinate frame. Based on the meshes and/or 3D keypoints, the system estimates pedestrian position and motion relative to the vehicle and updates at least one of: (i) a collision risk metric, (ii) a braking or steering command, or (iii) a trajectory constraint for a motion planner. The updated command or constraint is applied to control the vehicle and reduce collision risk.

*Section C.10.3 Augmented reality* / *virtual reality avatar rendering and tracking.* In another example embodiment, an AR/VR device captures image data of a user (or other persons) and applies the trained neural network model to estimate body-model parameters. Mesh module 205 generates a posed 3D mesh that is used to animate a user avatar by retargeting joint rotations and/or mesh deformations to an avatar rig, optionally after converting mesh topology using an interoperability mapping. The AR/VR system renders the animated avatar for display on a head-mounted display or other output device. In some embodiments, the inferred mesh is updated in real time to reduce pose jitter and to maintain temporal consistency of the avatar, thereby improving stability of the displayed content.

*Section C.10.4 Human-robot interaction and gesture-driven control.* In another example embodiment, the robot uses the trained neural network model to infer a posed mesh and/or 3D keypoints of a nearby user. The system derives one or more interaction features from the inferred mesh, such as hand position relative to an object, arm extension direction, torso orientation, or a predefined gesture class determined from a sequence of inferred poses. Based on the interaction features, the robot selects and executes a response, such as stopping motion, yielding right-of-way, offering an object, or positioning a gripper to a safe handover pose, thereby enabling safe and responsive human-robot interaction.

In the foregoing embodiments, the downstream operation produces a technical effect by converting sensor data into a 3D geometric representation of humans that is used to control a machine, update a collision-avoidance or motion-planning computation, and/or drive a real-time rendering pipeline.

### Section D. Interoperability and Synthetic Dataset Generation

Mappings between the differentiable parametric 3D human body model ("DP-3D-HBM", e.g., mesh) and existing mesh body models may be used to empirically evaluate models trained with the DP-3D-HBM model on existing benchmarks and to generate synthetic data as input images.

### Section D.1 Interoperability

With respect to mapping between the DP-3D-HBM model and existing mesh body models, sparse linear regressors *R* ∈ *R^{MxN}* may be trained to map vertex coordinates *vⱼ* ∈ (*R*³)*^{N}* from a first body model to coordinates *v́ᵢ* ∈ Σ*ⱼ R_{j,i}vⱼ* ∈ (*R*³)*^{M}* of a different body model with a different topology. This may be achieved by obtaining a set of target meshes generated with an alternate mesh body model (e.g., SMPL), and for each target mesh, optimizing pose parameters and shape parameters of the DP-3D-HBM model to generate a corresponding source mesh in the DP-3D-HBM topology that best matches the target mesh and by initializing the regression coefficients ***R*** as the barycentric coordinates of the projection of target mesh vertices onto the source mesh generated by the DP-3D-HBM model. The regression coefficients of ***R*** may then be refined jointly together with pose parameters and shape parameters of the DP-3D-HBM model to minimize the mesh-to-mesh distance, while enforcing the left/right symmetry of the mapping.

In some embodiments, the sparse linear regressor R used to map between a first mesh topology and a second mesh topology may be configured such that, for a given vertex of the target topology, the mapped position may be computed as a weighted combination of a small local set of vertices of the source topology. For example, a mapped target vertex may be computed using the vertices of a single source-mesh face that contains a closest-point projection of said target vertex onto the source mesh. In implementations where source faces are triangles, the local set consists of three source vertices and associated barycentric weights; and in implementations where source faces are quadrilaterals, the local set consists of four source vertices and associated interpolation weights. The sparse regressor may store, for each target vertex, (i) indices identifying the local set of source vertices and (ii) the associated interpolation weights.

In some embodiments, left/right symmetry of the interoperability mapping may be enforced by identifying symmetric vertex correspondences on each topology (e.g., left side vertex indices and corresponding right side vertex indices) and constraining the regressor coefficients for symmetric pairs to satisfy a mirroring relationship. For example, regression coefficients associated with a left side target vertex and a corresponding right side target vertex may be tied or averaged with coefficients for their symmetric counterparts such that the mapping preserves bilateral symmetry under a coordinate reflection.

In some embodiments, interoperability includes generating bidirectional regression mappings between two model topologies, including a forward regressor R(A→B) and a reverse regressor R(B→A). In some embodiments, training and/or evaluation of the regressors includes computing a cyclic error by mapping a mesh from topology A to topology B and then back from topology B to topology A, and minimizing a cyclic mesh error metric (e.g., mean per vertex distance) to encourage consistency of forward and reverse conversions.

In some embodiments, interoperability may further include converting skeletal information between different rig definitions. For example, a joint correspondence table may be stored that maps joints of a first skeletal rig to corresponding joints of a second skeletal rig. In some embodiments, a pose representation for a first rig may be retargeted to a second rig by (i) initializing rotations for the second rig using the correspondence table, and (ii) refining joint rotations by optimizing an objective function that penalizes differences between landmark vertex positions or joint positions while enforcing biomechanical joint limits. In some embodiments, skinning weights and/or vertex to bone attachment information may be transferred between rigs using the interoperability mapping between mesh topologies.

### D.1A Shape Statistical Modeling and Calibrated Phenotype Priors

In some embodiments, phenotype parameters may not be sampled uniformly but are generated using a calibrated statistical model that reflects anthropometric distributions of a reference population. Such calibrated sampling may be used to generate more realistic synthetic training data, and may also be used as a regularization prior when fitting phenotype parameters to image observations by optimization, thereby discouraging implausible body shapes.

In some embodiments, the phenotype space may include an interpretable age phenotype parameter that is normalized (e.g., within [0,1]) for mesh generation, and a mapping function is defined between the normalized age phenotype parameter and a morphological age expressed in years. In some embodiments, the mapping may be bijective over a predetermined age range such that a given normalized age value corresponds to a unique morphological age and vice versa, enabling statistical conditioning on real world age.

In some embodiments, major phenotype parameters may be modeled using parameterized probability distributions conditioned on at least age and gender. For example, one or more phenotype parameters may be sampled from Beta distributions whose shape parameters depend on the morphological age and gender. In some embodiments, parameters of the conditional distributions are calibrated so that anthropometric statistics computed from generated meshes match external anthropometric reference statistics, including at least one of height for age, weight for age, and body mass index for age.

In some embodiments, anthropometric measurements used for calibration may be computed directly from the resting mesh or posed mesh. For example, a height value may be computed as a distance between extreme vertices along an anatomical "up" axis in a canonical pose; a circumference value may be computed as a total length of a path on the mesh defined by a set of connected vertices selected to correspond to an anatomical cross-section (for example, a waist or chest path), and, in some embodiments, a circumference value may additionally or alternatively be computed by intersecting the mesh with a plane at a predetermined anatomical location and measuring a perimeter of the resulting cross-section; and a body mass index proxy may be computed as a function of height and either (i) mesh volume computed from a closed surface approximation or (ii) a weight phenotype parameter. In some embodiments, calibration is performed by an iterative procedure comprising: sampling phenotype vectors from current conditional distributions; generating corresponding meshes using the parametric model; computing anthropometric measurements from the generated meshes; comparing empirical statistics of said measurements to target reference statistics; and updating parameters of the conditional distributions to reduce a mismatch between empirical and target statistics.

In some embodiments, the calibrated statistical model may be used as a prior in a maximum a posteriori optimization that estimates phenotype parameters from images by minimizing an energy that includes both an image fit term and a negative log likelihood under the calibrated phenotype prior. In some embodiments, phenotype sampling for synthetic data may use rejection criteria comprising at least one of: biomechanical joint limit violations and a self collision test applied to a generated posed mesh.

### D.2 Synthetic Dataset Generation

A synthetic dataset containing synthetic images may be generated as follows and then used to train and test HMR models. The synthetic dataset may be generated by leveraging realistic human meshes of diverse body shapes, poses, and appearance, as well as rich scene contexts. In some embodiments, a dataset of 500k human synthetic images may be generated by leveraging both a target annotation for each human using the DP-3D-HBM model, and various methods for generating human characters such as the Human Generator available at HumGen3D.com. Further, each human character may be augmented with random clothes and assets (e.g., 3D models and textures), and then randomly placed into detailed, realistic indoor scenes, procedurally generated using for example Infinigen (i.e., a procedural generator of 3D scenes available at infinigen.org), while ensuring no intersection with surrounding objects and humans.

In one implementation, approximately 5 humans may be included on average per scene, and for each scene, up to 40 views may be rendered, with camera placement biased to be focused on humans. In addition, a field-of-view may be randomly selected for the camera between 30 and 130 degrees. Close-up views of hands may also be rendered for a subset of the images in the dataset. Body poses and shapes may be randomly selected from a human motion capture dataset such as AMASS available at amass.is.tue.mpg.de, while independently sampling hand poses from GRAB available at github.com/otaheri/GRAB. For about a fifth of the data, AMASS shape parameters may be replaced by ones uniformly sampled from the shape space of the DP-3D-HBM model for defining a mesh, followed by a self-collision check to ensure physical plausibility.

In some embodiments, self collision detection may be performed by first assigning mesh faces (or vertices) to anatomical body parts based on skeletal attachment information. For example, a face may be assigned to a body part corresponding to a bone that has a maximum skinning weight among vertices of said face, or based on predetermined vertex to body part labels derived from the skeletal rig.

In some embodiments, self collision detection comprises building a bounding volume hierarchy (BVH) over mesh faces for each of a plurality of body parts and performing a broad phase intersection search to identify candidate face pairs belonging to different body parts. Candidate face pairs may then be evaluated using a narrow phase triangle to triangle intersection test to confirm interpenetration.

In some embodiments, the result of self collision detection may be output as a physical plausibility indicator for a generated mesh and may be used to filter sampled pose/shape combinations. For example, if a self collision is detected, the sampled combination may be rejected during dataset generation, and if no self collision is detected, the sampled combination may be accepted for rendering.

In some embodiments, upon detecting a self collision, the system may perform an automatic correction procedure by adjusting one or more joint rotations to reduce interpenetration. In some embodiments, the correction procedure may solve an optimization that minimizes a collision penalty term subject to biomechanical joint limits for the selected rig, optionally jointly with a task loss that preserves a desired pose.

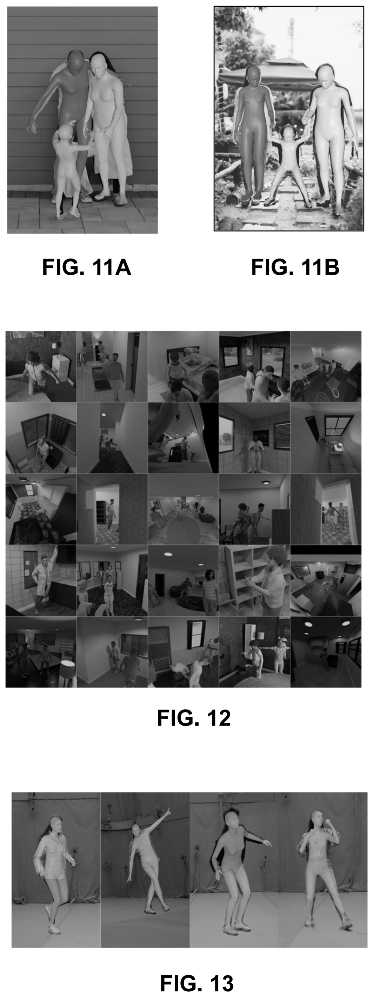

Examples of posed synthetic characters are illustrated in Figures 11A and 11B. Images in the synthetic dataset may be rendered at resolution 1280 × 1280 using different methods such as Blender available at blender.org. Figure 12 depicts samples from the dataset of 500k synthetic images. In some embodiments, 20k of the images may be retained as a test set. The forgoing synthetic data pipeline for creating the dataset of synthetic images advantageously allows the creation of large-scale, diverse, and realistic training data covering a wide range of human appearances, poses and arrangements in indoor environments.

### D.3 Dataset for testing full-body mesh recovery

Also a dataset for testing and training full-body human mesh recovery (HMR) models may be annotated using the DP-3D-HBM model. In some embodiments, the dataset may be annotated with fits on 1,380 images over timesteps from the 4DHumanOutfit dataset available at kinovis.inria.fr/ 4dhumanoutfit/, that includes adults with diverse body shapes, captured from four views. Annotations may be obtained using optimization. The mean pose and shape, parameters of the DP-3D-HBM model may be optimized to match 2D key points extracted from multi-view images. Whole-body key points may be detected with existing methods, while hand accuracy may be improved using a hand-specific model applied on hand crops. Final fits may be manually refined in a custom interface by correcting key points and re-optimizing as needed. Examples of the synthetic dataset for testing full-body mesh recovery are shown in Figure 13.

### Section E. Human Mesh Recovery

The dataset of images with accompanying annotations in Section D may be used for training Human Mesh Recovery (HMR) models that are used for reconstructing 3D human meshes from 2D (two-dimensional) images. Large-scale synthetic data may be sufficient, or even preferred, over real data with inherent ground-truth noise, for training HMR models. This Section concerns the inverse problem of recovering mesh parameters using HMR models by using the dataset of images with accompanying annotations for training HMR models.

US Patent Application Serial No. 18/987,215, which discloses a Multi-HMR model for recovering a 3D mesh of N humans in a 3D scene, may be adapted to the DP-3D-HBM model and the synthetic dataset. The Multi-HMR model may be built on a Vision Transformer (ViT) backbone, pre-trained with DINOv2 and made available in various sizes (ViT-S, ViT-B, ViT-L) with 14 × 14 patches. The ViT backbone may also be followed by a cross-attention-based decoder that process backbone output tokens corresponding to detected people. The multi-HMR model may take full, uncropped images as input, and may be trained to detect humans, regress expressive human meshes, and place them in a 3D scene. In one implementation, the ViT-B backbone variant may be used with a resolution of 448 × 448.

The Multi-HMR model may use a 2D supervision loss to improve consistency of 3D predictions with respect to the camera. Such 2D supervision is usually done using a 2D reprojection objective. Denoting *xᵢ* ∈ *R*³ the coordinates of some predicted 3D point (e.g., a mesh vertex or a body joint) and *ùᵢ* ∈ *R*² its target 2D location in camera coordinates (for *i =* 1 ... *N* )*,* a 2D reprojection error can be expressed as: ${L}_{2 Drepoj} = {\sum }_{i} \left|{\prod }_{K} \left({x}_{i}\right) - {\dot{u}}_{i}\right| ,$ where Π*_{K}* denotes the projection operator onto the camera plane. The projection operator of a pinhole camera produces infinitely large values as points *xᵢ* approach the camera plane and is discontinuous when points cross the image plane. As a consequence, such 2D reprojection loss may cause instability during training, especially in the early stages when points may be predicted in arbitrary locations. Methods such as the Multi-HMR model rely on a multi-stage training procedure and include a 2D reprojection objective only after a prolonged training period to avoid these instabilities. A stable alternative may be utilized instead, based on the reprojection error on a sphere. The inverse projection operator ${Π}_{K}^{- 1}$ that maps 2D camera coordinates to 3D directions on the half-sphere in front of the camera is continuous and differentiable, contrary to Π*_{K}*. The angular error may therefore minimized between the predicted 3D directions and target 2D rays as: ${L}_{2 Dangle} = \frac{1}{{s}_{K}} {\sum }_{i} ∠ \left({x}_{i}, {\prod }_{K}^{- 1} \left({\dot{u}}_{i}\right)\right) ,$ where *s_{K}* is a scaling factor defined as the camera diagonal field of view angle. The angular error is stable except for points located at the camera center, where the angle is undefined. In one implementation, points within a 0.1m radius around the camera center may be ignored when computing this loss.

**Table 1**

| **Supervision** | **AGORA-All** | | **3DPW** | | **EHF** | |
|---|---|---|---|---|---|---|
| | **PVE** | **PA-PVE** | **PVE** | **PA-PVE** | **PVE** | **PA-PVE** |
| w/o 2D vertices supervision | 128.1 | 65.3 | 122 | 73.3 | 69.4 | 42.7 |
| w. L2D reproj | 129.2 | 66.4 | 116.3 | 73.2 | 67.7 | 43.3 |
| w. L2D angle | 118.5 | 63.5 | 114.4 | 72.7 | 60.9 | 42.7 |

In some embodiments, the angular 2D supervision loss described above may be applied from early stages of training without requiring a multi stage schedule that delays 2D supervision. This is enabled because inverse projection to 3D rays provides a continuous and differentiable target direction field and avoids instability associated with direct pinhole reprojection when predicted points cross the camera plane.

In some embodiments, the sparse linear regressor R used to map between a first mesh topology and a second mesh topology may be configured such that, for a given vertex of the target topology, the mapped position is computed as a weighted combination of a small local set of vertices of the source topology. For example, a mapped target vertex may be computed using the vertices of a single source-mesh face that contains a closest-point projection of said target vertex onto the source mesh. In implementations where source faces are triangles, the local set consists of three source vertices and associated barycentric weights; and in implementations where source faces are quadrilaterals, the local set consists of four source vertices and associated interpolation weights. The sparse regressor may store, for each target vertex, (i) indices identifying the local set of source vertices and (ii) the associated interpolation weights.

Table 1 sets forth the impact of training with and without the use of the angular error. Using the Multi-HMR model training procedure significant gains may be observed in Per Vertex Error (PVE) metrics for all AGORA (Avatars in Geography Optimized for Regression Analysis), 3DPW (3D Pose in the Wild) and EHF (*Expressive Hands and Faces*) datasets when using the proposed angular error. An additional benefit of the proposed angular error is that it removes the need for complex training procedures where 2D supervision is only used in a second stage as in Multi-HMR training.

Advantageously, image-based HMR models trained with the DP-3D-HBM model on a synthetic dataset developed as described herein are able to match state-of-the-art performance on standard benchmarks, while outperforming such benchmarks when high shape diversity is required. In particular, such trained models enable the recovery of body meshes of adults and children using a single body model.

### Section E.1 Phenotype Parameter Inference and Annotation Tools

In some embodiments, interpretable phenotype parameters may be determined from 3D geometry of a person. For example, a machine learning model may receive as input a mesh, point cloud, or depth derived surface corresponding to a person and output a phenotype parameter vector comprising one or more interpretable phenotypes, which may then be used to generate a mesh with the parametric body model, to annotate datasets, or to regularize optimization based fitting. Additionally or alternatively, the phenotype parameter vector may be determined by optimization, including a gradient-descent based procedure that iteratively updates phenotype parameter values to reduce an objective function measuring a mismatch between (i) the input 3D geometry and (ii) a generated 3D geometry produced by the parametric body model from the phenotype parameter values. In one embodiment, the objective function includes at least one of: (i) a vertex-to-vertex distance, (ii) a point-to-surface distance, (iii) a Chamfer distance, and (iv) a normal-consistency term. In one embodiment, the optimization jointly updates phenotype parameters and a rigid transformation between coordinate frames of the input 3D geometry and the generated 3D geometry.

In some embodiments, the phenotype inference model may be trained using synthetic training samples produced by rendering images and/or generating 3D geometry from the parametric model with known ground truth phenotype parameters and poses, thereby providing paired training data comprising 3D geometry (or rendered depth/normal maps) and ground truth phenotype labels.

In some embodiments, the phenotype inference model may output, in addition to phenotype parameter values, a confidence score or uncertainty value for at least one phenotype parameter, such that downstream processes can weight a phenotype prior, request additional observations, or route samples for human review. Additionally or alternatively, an uncertainty may be derived from an optimization residual error value, sensitivity of the objective function near an optimum, or an estimated covariance of phenotype parameters.

In some embodiments, phenotype parameters estimated by a model may be evaluated by generating a mesh using the parametric body model and converting the generated mesh to a different topology using the interoperability mapping described in Section D.1, thereby enabling evaluation on benchmarks that assume a different mesh model.

In some embodiments, phenotype inference from 3D geometry and/or images may be regularized using a calibrated phenotype prior, such as the conditional distributions described in Section D.1A, to discourage implausible phenotype combinations and to improve robustness under occlusion.

In some embodiments, an annotation tool may be provided to annotate images with pose parameters and phenotype parameters. The annotation tool may (i) generate an initial estimate of pose and shape parameters using a trained model and/or optimization, (ii) display the resulting mesh overlay and/or keypoints to a user via a graphical user interface, (iii) receive user corrections to keypoints and/or mesh landmarks, and (iv) re optimize pose and phenotype parameters using the differentiable parametric model to produce refined annotations. In some embodiments, the tool stores, for each annotated image, pose parameters, phenotype parameters, a generated mesh, and optionally a topology converted mesh produced using an interoperability mapping.

### Section E.2 Pose Priors and Constrained Pose Sampling

In some embodiments, a generative pose prior may be trained for pose parameters of the parametric model. For example, an autoencoder-based pose prior (e.g., a VPoser-type model) or an autoencoding generative model (e.g., a latent-variable autoencoder and/or a normalizing flow model) may be trained to encode pose parameters into a latent code and decode the latent code into pose parameters, enabling pose sampling and enabling use of the pose prior as a learned regularizer during optimization. In embodiments using a normalizing flow model, the flow model is trained to learn an invertible transformation between pose parameters and a latent representation, thereby enabling sampling in the latent representation and transformation to pose parameters. In some embodiments, the pose prior may be trained using a training set comprising pose parameters selected to satisfy one or more physical plausibility constraints, such as biomechanical joint limits and/or a self-collision criterion evaluated on a mesh generated using the pose parameters. Additionally or alternatively, training may include a loss term that penalizes violations of one or more such physical plausibility constraints. In one embodiment, pose parameters decoded from sampled or optimized latent codes are thereby biased toward physically plausible poses; and, in some embodiments, decoded pose parameters may additionally be post-processed to enforce biomechanical joint limits and/or to reject or correct poses that trigger a self-collision condition.

In some embodiments, sampled or decoded pose parameters may be constrained using biomechanical joint limits and using a self-collision test applied to a mesh generated by the differentiable model. For example, candidate pose parameters may be rejected or corrected if a self-collision is detected, thereby biasing pose sampling toward physically plausible poses.

In some embodiments, training data for a pose prior may be obtained from motion capture pose sequences, and pose sequences are filtered prior to training to remove samples that violate biomechanical joint limits and/or fail a self-collision plausibility test.

In some embodiments, pose sampling may be conditioned on a context label, such as an action label, an interaction label, or a scene context label, by conditioning the pose prior on the context label when sampling or optimizing the latent code.

In some embodiments, the pose prior may be used as a regularization term in an optimization that fits the parametric model to image observations by penalizing unlikely pose parameters under the learned pose prior, optionally together with joint limit penalties and collision penalties.

### Section F. General

The foregoing description is merely illustrative in nature and is in no way intended to limit the disclosure, its application, or uses. The broad teachings of the disclosure may be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure may be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules, circuit elements, semiconductor layers, etc.) are described using various terms, including "connected," "engaged," "coupled," "adjacent," "next to," "on top of," "above," "below," and "disposed." Unless explicitly described as being "direct," when a relationship between first and second elements is described in the above disclosure, that relationship can be a direct relationship where no other intervening elements are present between the first and second elements, but can also be an indirect relationship where one or more intervening elements are present (either spatially or functionally) between the first and second elements. As used herein, the phrase at least one of A, B, and C should be construed to mean a logical (A OR B OR C), using a non-exclusive logical OR, and should not be construed to mean "at least one of A, at least one of B, and at least one of C.".

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" or the term "controller" may be replaced with the term "circuit." The term "module" may refer to, be part of, or include: an Application Specific Integrated Circuit (ASIC); a digital, analog, or mixed analog/digital discrete circuit; a digital, analog, or mixed analog/digital integrated circuit; a combinational logic circuit; a field programmable gate array (FPGA); a processor circuit (shared, dedicated, or group) that executes code; a memory circuit (shared, dedicated, or group) that stores code executed by the processor circuit; other suitable hardware components that provide the described functionality; or a combination of some or all of the above, such as in a system-on-chip.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits. For example, multiple modules may allow load balancing. In a further example, a server (also known as remote, or cloud) module may accomplish some functionality on behalf of a client module.

The term code, as used above, may include software, firmware, and/or microcode, and may refer to programs, routines, functions, classes, data structures, and/or objects. The term shared processor circuit encompasses a single processor circuit that executes some or all code from multiple modules. The term group processor circuit encompasses a processor circuit that, in combination with additional processor circuits, executes some or all code from one or more modules. References to multiple processor circuits encompass multiple processor circuits on discrete dies, multiple processor circuits on a single die, multiple cores of a single processor circuit, multiple threads of a single processor circuit, or a combination of the above. The term shared memory circuit encompasses a single memory circuit that stores some or all code from multiple modules. The term group memory circuit encompasses a memory circuit that, in combination with additional memories, stores some or all code from one or more modules.

The term memory circuit is a subset of the term computer-readable medium. The term computer-readable medium, as used herein, does not encompass transitory electrical or electromagnetic signals propagating through a medium (such as on a carrier wave); the term computer-readable medium may therefore be considered tangible and non-transitory. Non-limiting examples of a non-transitory, tangible computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The apparatuses and methods described in this application may be partially or fully implemented by a special purpose computer created by configuring a general purpose computer to execute one or more particular functions embodied in computer programs. The functional blocks, flowchart components, and other elements described above serve as software specifications, which can be translated into the computer programs by the routine work of a skilled technician or programmer.

The computer programs include processor-executable instructions that are stored on at least one non-transitory, tangible computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation) (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective C, Swift, Haskell, Go, SQL, R, Lisp, Java^{®}, Fortran, Perl, Pascal, Curl, OCaml, Javascript^{®}, HTML5 (Hypertext Markup Language 5th revision), Ada, ASP (Active Server Pages), PHP (PHP: Hypertext Preprocessor), Scala, Eiffel, Smalltalk, Erlang, Ruby, Flash^{®}, Visual Basic^{®}, Lua, MATLAB, SIMULINK, and Python^{®}.

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art and are also intended to be encompassed by the following claims.

It will be appreciated that various of the above-disclosed and other features and functions, or alternatives thereof, may be desirably combined into many other different systems or applications. Also, various presently unforeseen or unanticipated alternatives, modifications, variations or improvements therein may be subsequently made by those skilled in the art and are also intended to be encompassed by the following claims.

## Claims

1. A computer-implemented method for generating a three-dimensional, 3D, target mesh (330), the method comprising:
applying (802) shape parameters to a base mesh (312) to define a resting mesh (406) that is adjusted based on a target shape description (304);
generating (804) a target rig (412) using forward kinematics from a resting rig (408) and 3D target pose parameters (322); and
generating (806) a target mesh (330) using blend skinning by deforming the resting mesh (406) based on a pose of the target rig relative to the resting rig;
wherein applying shape parameters, generating the target rig and generating the target mesh defines a differentiable parametric model (205).

2. The computer-implemented method of claim 1, wherein the target shape description (304) includes a set of phenotypes.

3. The computer-implemented method of claim 2, wherein said applying (802) comprises:
computing the resting mesh (406) from the base mesh (312) using (i) 3D vertices (405) associated with the base mesh (312) and (ii) 3D vertex displacements (407); and
wherein said computing interpolates between blend shapes (409) associated with the set of phenotypes to compute displacements of the resting mesh vertices from the base mesh vertices.

4. The computer-implemented method according to one of claims 1 to 3, wherein generating (806) said target mesh (330) using blend skinning comprises applying a blend skinning function to a set of skinning weights and vertices.

5. The computer-implemented method of claim 4, wherein the blend skinning function is a linear operation or a quaternion operation.

6. The computer-implemented method of claim 2, wherein the set of phenotypes includes one or more of gender, age, race, muscle, weight, height and proportions.

7. The computer-implemented method of one of claims 1 to 6, wherein the target rig (412) is generated by sequentially applying a plurality of the 3D target pose parameters.

8. The computer-implemented method of one of claims 1 to 7, wherein the base mesh (312) is selected based on a determined quality level.

9. The computer-implemented method of claim 8, wherein the quality level is determined based on one or more of available processing resources and downstream application or wherein the quality level is determined based on a specified resolution of the target mesh.

10. The computer-implemented method of one of claims 1 to 9, further comprising training a neural network model to estimate body-model parameters for a person based on sensor data comprising at least one image depicting the person in a scene, the body-model parameters comprising at least 3D target pose parameters and shape parameters.

11. The computer-implemented method of claim 10, further comprising:
obtaining sensor data comprising at least one image depicting a person in a scene;
applying the trained neural network model to the sensor data to estimate body-model parameters for the person;
generating, using the differentiable parametric model (205) and the estimated body-model parameters, a three-dimensional, 3D, target mesh for the person; and
performing, based on the 3D target mesh for the person, a downstream operation comprising at least one of:
updating a collision-avoidance map or navigation plan of an autonomous robot or vehicle and generating a control signal for at least one actuator of the autonomous robot or vehicle based on the updated collision-avoidance map or navigation plan,
rendering an animated avatar for display by an augmented reality or virtual reality device, and
selecting or generating a robot control response in a human-robot interaction system..

12. The computer-implemented method of one of claims 1 to 11, further comprising computing a synthetic dataset using the method for generating a three-dimensional, 3D, target mesh.

13. The computer-implemented method of claim 12, further comprising training a Human Mesh Recovery, HMR, model for reconstructing 3D human meshes from 2D images using the synthetic dataset and the method for generating a three-dimensional, 3D, target mesh.

14. A system comprising one or more processors configured to perform the computer-implemented method of one of claims 1 to 13.

15. A computer program including instructions which, when the program is executed by a computer, cause the computer to perform the computer-implemented method of one of claims 1 to 13.
